Europäisches Patentamt

European Patent Office

Office européen des brevets

(19)

(11) Veröffentlichungsnummer: **0 092 025**
**B1**

(12) # EUROPÄISCHE PATENTSCHRIFT

(45) Veröffentlichungstag der Patentschrift:
31.07.85

(21) Anmeldenummer: 83100971.7

(22) Anmeldetag: 02.02.83

(51) Int. Cl.⁴: **A 01 B 63/111**

(54) Ackerschlepper mit einer heck- und frontseitigen Geräteanbauvorrichtung.

(30) Priorität: 17.04.82 DE 3214206

(43) Veröffentlichungstag der Anmeldung:
26.10.83 Patentblatt 83/43

(45) Bekanntmachung des Hinweises auf die Patenterteilung:
31.07.85 Patentblatt 85/31

(84) Benannte Vertragsstaaten:
AT DE FR GB IT

(56) Entgegenhaltungen:
DE - B - 1 300 033

LANDTECHNIK, Band 9, Nr. 10, 20. Juni 1973,
Lehrte-Hannover D.HOFFMANN et al.
"Entwicklungstendenzen der Hydraulik in
Landmaschinen",Seiten 264-265
GRUNDLAGEN LANDTECHNIK, Band 24, Nr. 1, 1974
H.J.MATTHIES "Entwicklungslinien auf dem Gebiet der
Schlepperhydraulik",Seiten 31-40

(73) Patentinhaber: Klöckner-Humboldt-Deutz
Aktiengesellschaft,
Deutz-Mülheimer-Strasse 111 Postfach 80 05 09,
D-5000 Köln 80 (DE)

(72) Erfinder: Knepper, Herbert, Kentenichstrasse 15,
D-5040 Brühl (DE)

## Beschreibung

Die Erfindung bezieht sich auf einen Ackerschlepper mit einer heck- und frontseitigen Gerätebauvorrichtung und je einem damit zum Heben und Senken von Arbeitsgeräten gekoppelten hydraulischen Kraftheber, von denen der Heckkraftheber zu seiner Betätigung abhängig sowohl von Meß-, Vergleichs- bzw. Mischwerten aus dem Arbeitswiderstand und der Lage eines Arbeitsgeräts und/oder des Zylinderdruckes als auch einer willkürlichen Einstellung mit Regel-Steuerelementen verbunden ist und wobei der Frontkraftheber zum willkürlichen Heben bzw. Senken eines Arbeitsgeräts an ein Steuerelement angeschlossen ist.

Bei einem Ackerschlepper mit heckseitiger Geräteanbauvorrichtung wird der daran angreifende hydraulische Kraftheber durch ein dessen Druckmittelversorgung beherrschendes Regelgerät nach den an Istwertgebern ermittelten Werten der Lage, des Arbeitswiderstandes eines Arbeitsgerätes bzw. des Druckes im Hubzylinder des Krafthebers so geregelt, daß ein zu der eingestellten Regelungsart eingespeister Sollwert, beispielsweise für den Arbeitswiderstand eines Gerätes, beim Betrieb des Schleppers ohne Zutun des Fahrers im wesentlichen eingehalten wird. Bei manchen Regelgeräten dieser Art ist es auch möglich, ermittelte Istwerte, beispielsweise Istwerte der Lage und des Arbeitswiderstandes, in einem bestimmten oder wählbaren Verhältnis zu mischen, was allgemein als Mischregelung bekannt ist.

Ferner besteht auch die Möglichkeit, ein Arbeitsgerät von Hand nach Sicht zu steuern, wenn sich dies als zweckdienlich erweist. Bei frontseitigen Geräteanbauvorrichtungen ist bislang die Steuerung der dafür vorgesehenen Arbeitsgeräte von Hand üblich. Hierdurch wird der Fahrer jedoch je nach Art und Arbeitsweise des Gerätes und anderen Einflüssen zeitweise so stark beansprucht, daß er seine ganze Aufmerksamkeit der Führung des Arbeitsgerätes widmen muß. Die zusätzliche Anordnung eines Regelgerätes für die frontseitige Geräteanbauvorrichtung ist aber recht kostspielig, da Regelgeräte dieser Art und die entsprechenden Anlagen sehr aufwendig sind.

Der Erfindung liegt daher die Aufgabe zugrunde, einen Ackerschlepper der eingangs geschilderten Gattung mit einer regel- und steuerbaren heckseitigen sowie einer steuerbaren frontseitigen Geräteanbauvorrichtung ohne große Aufwendungen dahingehend zu verbessern, daß der Fahrer außer den gegebenen Voraussetzungen für eine willkürliche Beeinflussung des frontseitigen Arbeitsgerätes wahlweise auch die Möglichkeit hat, das Arbeitsgerät einer Regelung zu unterwerfen.

Die Aufgabe wird erfindungsgemäß dadurch gelöst, daß der Frontkraftheber auch für eine Arbeitsweise nach zumindest einem Teil der Regelungsarten des Heckkrafthebers mit Elementen zu seiner Regelung verbindbar ist und daß beide Kraftheber gemeinsame Regelelemente und ein gemeinsames Steuerelement aufweisen, an die durch einen Umschalter die Hubzylinder der beiden Kraftheber derart anschließbar sind, daß der eine steuerbar und der andere regelbar oder umgekehrt arbeitet.

Durch diese Maßnahmen ist mit geringsten Mitteln die Möglichkeit gegeben, von zwei gleichzeitig an einem Ackerschlepper arbeitenden Geräten eines nach einer der vorgesehenen Regelungsarten zu betreiben, während das andere steuerbar ist. Diese Lösung ist nicht nur aus wirtschaftlichen, sondern auch aus praktischen Erwägungen durchaus vertretbar, da beim Betrieb eines Schleppers mit zwei Arbeitsgeräten die Regelung eines der beiden Geräte ausreicht.

Bei einem Ackerschlepper, wobei das von einer Hydropumpe versorgte hydraulische System ein von Hand einstellbares Steuerventil für die willkürliche Betätigung sowie ein von einem Regelgerät zur Verarbeitung der ermittelten Meßwerte beeinflußtes Regelventil für die selbsttätige Einstellung der Kraftheberanlage aufweist, ist in Weiterbilden der Erfindung vorgesehen, daß das Steuerventil und das Regelventil über einen als Wegeventil ausgebildeten Umschalter mit den Hubzylindern der beiden Kraftheberanlagen in Verbindung steht.

Bei einem Ackerschlepper mit elektrischen Meßwertgebern zur Ermittlung der Lage-Istwerte ist es gemäß der Erfindung vorteilhaft, wenn der Umschalter für die Hubzylinder mit einem elektrischen Schalter gekoppelt ist, durch den bei Betätigung des Umschalters der Lage-Istwertgeber des jeweils in Betrieb befindlichen Hubzylinders mit dem Regelgerät verbindbar ist.

Ferner ist es bei einem Ackerschlepper mit elektrischen Meßwertgebern zur Ermittlung der Istwerte des Arbeitswiderstandes im Rahmen der Erfindung zweckdienlich, wenn der Umschalter für die Hubzylinder mit einem zweiten elektrischen Schalter gekoppelt ist, durch den bei Betätigung des Umschalters der Istwertgeber für den Arbeitswiderstand der jeweils in Betrieb befindlichen Kraftheberanlage mit dem Regelgerät verbindbar ist.

Weiterhin ist in vorteilhafter Weise das Meßglied für den Istwertgeber des Zylinderdruckes an die vom Regelventil ausgangsseitig über den Umschalter mit dem jeweiligen Hubzylinder verbindbare Druckleitung angeschlossen.

Gemäß einer anderen vorteilhaften Ausgestaltung der Erfindung ist zur Verarbeitung der ermittelten Istwerte der Lage, des Arbeitswiderstandes bzw. des Zylinderdruckes ein elektrisches Regelgerät mit einem elektrischen Schalter zur Wahl der gewünschten Regelungsart des Arbeitsgerätes angeordnet, wobei das Regelgerät ebenfalls auf elektrischem Wege mit den elektromagnetischen Betätigungselementen des Regelventils verbunden ist.

Schließlich ist es zudem zweckmäßig, wenn am Systemschalter des Regelgeräts auch eine Schaltstufe für den Eingang externer Istwerte vorgesehen ist, die insbesondere von einem Istwertgeber an einem Arbeitsgerät ausgehen können.

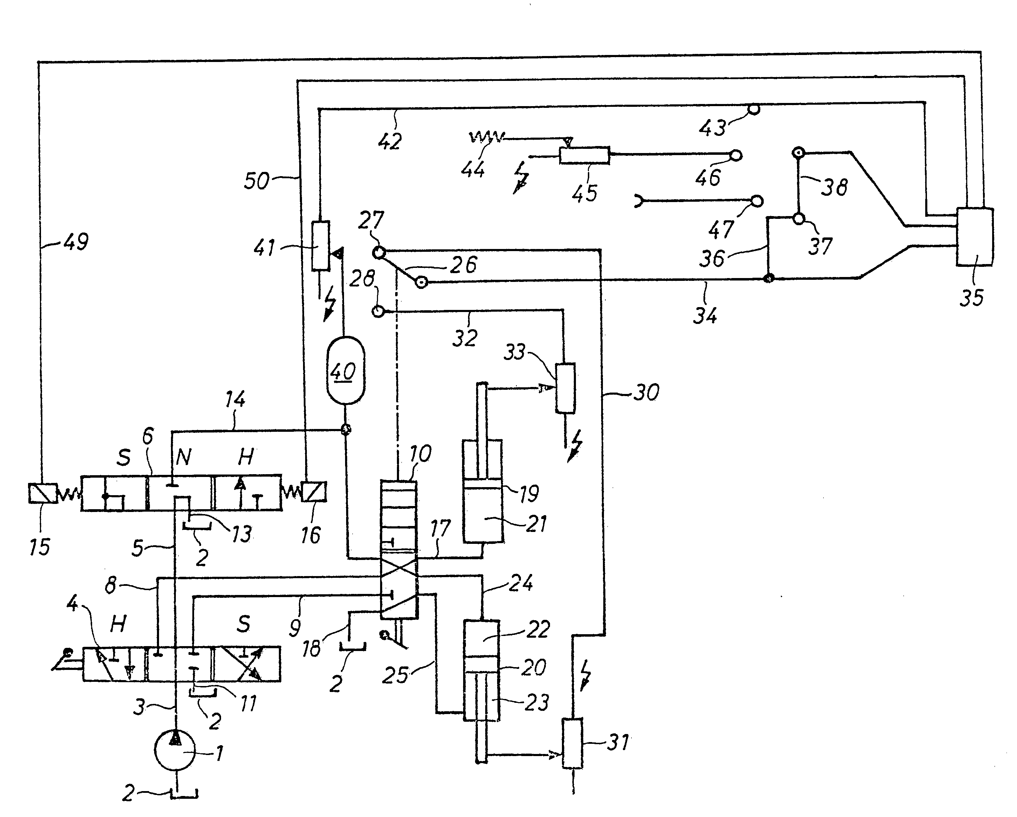

Die Erfindung wird im folgenden anhand eines Ausführungsbeispiels unter Bezugnahme auf die Zeichnung näher beschrieben.

Die einzige Abbildung zeigt schematisch eine für zwei Kraftheber vorgesehene, umschaltbare elektrohydraulische Regelsteuereinrichtung gemäß der Erfindung.

Die gezeigte hydraulische Einrichtung für die Kraftheber von Geräteanbauvorrichtungen eines Schleppers hat eine ständig angetriebene Druckmittelpumpe 1, die saugseitig mit einem Vorratsbehälter 2 für Druckflüssigkeit und druckseitig durch eine Leitung 3 mit einem als Wegeschieber ausgebildeten Steuerventil 4 in Verbindung steht. Das Steuerventil 4 ist von Hand betätigbar und hat drei Schaltstellungen, von denen die mittlere Ausgangsstellung dargestellt ist. Die anderen beiden Schaltstellungen sind entsprechend ihrer Wirkungsweise mit H = Heben bzw. S = Senken gekennzeichnet. Vom Steuerventil 4 führt eine Leitung 5 zu einem ebenfalls als Wegeschieber ausgebildeten Regelventil 6, während zwei andere Leitungen 8 und 9 das Steuerventil 4 mit einem als Wegeschieber ausgebildeten Umschaltventil 10 verbinden. Das Steuerventil 4 ist ferner durch eine Leitung 11 mit dem Vorratsbehälter 2 verbunden. Das Regelventil 6 hat außer der dargestellten mittleren Neutralstellung noch die Schaltstellungen S = Senken und H = Heben. Zur Weiterführung der dem Regelventil 6 durch die Leitung 5 zugeführten Druckflüssigkeit ist dieses durch eine Leitung 13 mit dem Vorratsbehälter 2 und durch eine weiterführende Leitung 14 mit dem Umschaltventil 10 verbunden. Zur Betätigung des Regelventils 6 greifen an diesem beiderseits elektromagnetische Stellorgane 15 und 16 an. Das Umschaltventil 10 ist in seine beiden möglichen Schaltstellungen von Hand umschaltbar und steht ferner durch eine Leitung 18 mit dem Vorratsbehälter 2 in Verbindung. In der hier beschriebenen hydraulischen Anlage ist für einen heckseitigen Kraftheber ein einfach wirkender Hubzylinder 19 sowie für einen frontseitigen Kraftheber ein doppelt wirkender Hubzylinder 20 vorgesehen. Zur hydraulischen Versorgung des Hubzylinders 19 steht dessen Arbeitsraum 21 durch eine Leitung 17 mit dem Umschaltventil 10 in Verbindung. Ebenso sind die beiden Arbeitsräume 22 und 23 des Hubzylinders 20 durch je eine Leitung 24 bzw. 25 an das Umschaltventil 10 angeschlossen. Das Umschaltventil 10 ist mechanisch mit einem elektrischen Schalter 26 betätigungsmäßig gekoppelt, der zwei Schaltkontakte 27 und 28 aufweist. Der Schaltkontakt 27 ist durch eine Leitung 30 mit einem elektrischen Geber 31 für die Istwerte der Lage eines frontseitigen Arbeitsgerätes verbunden. Ebenso steht der Schaltkontakt 28 durch eine Leitung 32 mit einem elektrischen Geber 33 in Verbindung, der ständig Istwerte der Lage eines heckseitig angeordneten Arbeitsgerätes ermittelt. Vom Schalter 26 führt eine Leitung 34 zu einem elektrischen Steuergerät 35, während eine Leitung 36 die Leitung 34 mit einem Schaltkontakt 37 eines Systemschalters 38 verbindet. Eine an die Leitung 14 angeschlossene Meßeinrichtung 40 für den Druck in dem jeweils zur Regelung vorgesehenen Hubzylinder 19 bzw. 20 hat einen elektrischen Istwertgeber 41, der über eine Leitung 42 sowohl mit einem Schaltkontakt 43 des Systemschalters 38 als auch mit dem Regelgerät 35 verbunden ist. Außerdem ist für die Istwerte des Arbeitswiderstandes eines Arbeitsgerätes eine elektrische Meßeinrichtung 44 mit einem Istwertgeber 45 vorgesehen, die einen Schaltkontakt 46 am Systemschalter 38 aufweist. Dabei ist es zur Ermittlung genauer Meßwerte zweckdienlich, wenn für ein heckseitiges und ein frontseitiges Arbeitsgerät getrennte Meßstellen für die Istwerte des Arbeitswiderstandes vorhanden sind. Für diesen Fall läßt sich parallel zum Schalter 26 ein vom Umschaltventil 10 betätigter zweiter Schalter anordnen, der dem Regelgerät 35 die Istwerte des Arbeitswiderstandes vom jeweils im Betrieb befindlichen Arbeitsgerät bei entsprechender Stellung des Systemschalters 38 zuführt. Ein weiterer Schaltkontakt 47 am Systemschalter 38 dient zur Einspeisung externer Istwerte, wie sie beispielsweise von einem unmittelbar am Arbeitsgerät angeordneten Istwertgeber herrühren können. Außerdem führen vom Regelgerät 35 zur Übertragung der Regelimpulse zwei elektrische Leitungen 49 und 50 zu den elektromagnetischen Stellorganen 15 bzw. 16 am Regelventil 6. Schließlich ist am Regelgerät 35 auch ein nicht dargestellter Sollwertgeber vorhanden, an dem der jeweils gewünschte Sollwert für die gewählte Regelungsart einstellbar ist.

Die Wirkungsweise der beschriebenen Einrichtung ist wie folgt: Bei der gezeigten Schaltstellung des Steuerventils 4 gelangt die von der Druckmittelpumpe 1 geförderte Druckflüssigkeit durch die Leitungen 3, 5 und 13 unmittelbar zurück zum Vorratsbehälter 2. Geht nun von der bei der gezeigten Stellung des Systemschalters 38 und des Umschaltventils 10 auf Lageregelung geschalteten frontseitigen Kraftheberanlage eine Lageänderung des Arbeitsgerätes vonstatten, so ändert sich folglich der vom Istwertgeber 31 auf das Regelgerät 35 übertragene Istwert der Lage gegenüber dem eingegebenen Sollwert. Das Regelgerät 35 sorgt folglich dafür, daß das Regelventil 6 je nach Abweichung vom Sollwert in Richtung Heben oder Senken verschoben wird, do daß durch entsprechende Verstellung des Hubzylinders 20 eine Änderung der Lage des Arbeitsgerätes zur Korrektur der vorhergegangenen Abweichung erfolgt.

Mit dem Umschaltventil 10 kann der für die Regelung nach einem der gegebenen Regelungsarten vorgesehener Hubzylinder 19 oder 20 mit dem Regelventil 6 verbunden werden. Beim Schalten des Umschaltventils 10 wird stets auch der Schalter 26 betätigt, so daß damit der dem entsprechenden Hubzylinder 19 oder 20 zugeordnete Lage-Istwertgeber 31 bzw. 33 mit dem Steuergeräte 35 in Verbindung kommt. Zur Regelung der heckseitigen bzw. frontseitigen Kraftheberanlage nach dem Druck im jeweils über das Umschaltventil 10 eingeschalteten Hubzylinder 19 bzw. 20 wird der Systemschalter 38 mit dem Schaltkontakt 43 verbunden. Damit gelangen die am Istwertgeber 41 für den Zylinderdruck abgegriffenen Werte durch die Leitung 42 zum Steuergerät 35, das seinerseits das Regelventil 6 zur Versorgungs des angeschlossenen Hubzylinders 19 bzw. 20 mit Druckflüssigkeit abhängig von den Regelimpulsen beeinflußt.

Wird dagegen der Systemschalter 38 mit dem Schaltkontakt 46 verbunden, dann gelangen vom Geber 45 Istwerte des Arbeitswiderstandes eines angeschlossenen Arbeitsgeräts in das Regelgerät 35. Vom Regelgerät 35 ausgehende Regelimpulse beeinflussen das Regelventil 6, das folglich die Druckmittelzu- bzw. abführung des dabei über das Umschaltventil 10 eingeschalteten Hubzylinders 19 oder 20 regelt.

Die elektrischen Leitungen 34 und 42 sind einmal mit je einem Schaltkontakt 37 bzw. 43 und auch mit dem Regelgerät 35 direkt verbunden. Hierdurch ist die Möglichkeit gegeben, im Regelgerät 35 durch Betätigung eines nicht gezeigten Schalters eine Mischregelung zwischen den Istwerten des Zylinderdruckes und den Istwerten der Lage vorzunehmen. Es ist aber auch denkbar, bei der Einstellung des Regelgerätes 35 auf Mischregelung bei entsprechender Einstellung des Systemschalters 38 die eingehenden Istwerte des Arbeitswiderstandes eines Arbeitsgerätes mit einzubeziehen.

Das Umschaltventil 10 ist so in das System eingefügt, daß mit diesem einerseits der für die Regelung nach einem der möglichen Regelungsarten vorgesehene Hubzylinder 19 oder 20 der entsprechenden Kraftheberanlage einschaltbar ist. Andererseits steht durch das Umschaltventil 10 der jeweils nicht zur Regelung mit dem Regelventil 6 verbundene Hubzylinder 19 bzw. 20 mit dem Steuerventil 4 zur Steuerung eines angeschlossenen Arbeitsgerätes in Verbindung. Auf diese Weise ist beim beschriebenen hydraulischen System die Möglichkeit gegeben, daß beim Betrieb eines Schleppers mit einem heck- und frontseitigen Arbeitsgerät eines derselben gergelt wird, während das andere gleichzeitig steuerbar ist.

**Patentansprüche**

1. Ackerschlepper mit einer heck- und frontseitigen Geräteanbauvorrichtung und je einem damit zum Heben und Senken von Arbeitsgeräten gekoppelten hydraulischen Kraftheber (19; 20), von denen der Heckkraftheber (19) zu seiner Betätigung abhängig sowohl von Meß-, Vergleichs- bzw. Mischwerten aus dem Arbeitswiderstand und der Lage eines Arbeitsgeräts und/oder des Zylinderdruckes als auch einer willkürlichen Einstellung mit Regel-Steuerelementen (4 bzw. 6, 35) verbunden ist und wobei der Frontkraftheber (20) zum willkürlichen Heben bzw. Senken eines Arbeitsgeräts an ein Steuerelement (4) angeschlossen ist, dadurch gekennzeichnet, daß der Frontkraftheber auch für eine Arbeitsweise nach zumindest einem Teil der Regelungsarten des Heckkrafthebers mit Elementen (6, 35) zu seiner Regelung verbindbar ist und daß beide Kraftheber gemeinsame Regelelemente (6, 35) und ein gemeinsames Steuerelement (4) aufweisen, an die durch einen Umschalter (10) die Hubzylinder der beiden Kraftheber derart anschließbar sind, daß der eine steuerbar und der andere regelbar oder umgekehrt arbeitet.

2. Ackerschlepper nach Anspruch 1, wobei das von einer Hydropumpe (1) versorgte hydraulische System ein von Hand einstellbares Steuerventil (4) für die willkürliche Betätigung sowie ein von einem Regelgerät (35) zur Verarbeitung der ermittelten Meßwerte beeinflußtes Regelventil (6) für die selbsttätige Einstellung der Kraftheberanlage aufweist, dadurch gekennzeichnet, daß das Steuerventil (4) und das Regelventil (6) über einen als Wegeventil ausgebildeten Umschalter (10) mit den Hubzylindern (19, 20) der beiden Kraftheberanlagen in Verbindung steht.

3. Ackerschlepper nach den Ansprüchen 1 und 2, wobei elektrische Meßwertgeber (31, 33) zur Ermittlung der Lage-Istwerte vorgesehen sind, dadurch gekennzeichnet, daß der Umschalter (10) für die Hubzylinder (19, 20) mit einem elektrischen Schalter (26) gekoppelt ist, durch den bei Betätigung des Umschalters (10) der Lage-Istwertgeber (30 bzw. 31) des jeweils in Betrieb befindlichen Hubzylinders (19 bzw. 20) mit dem Regelgerät (35) verbindbar ist.

4. Ackerschlepper nach den Ansprüchen 1—3, wobei elektrische Meßwertgeber (45) zur Ermittlung der Istwerte des Arbeitswiderstandes vorgesehen sind, dadurch gekennzeichnet, daß der Umschalter (10) für die Hubzylinder (19, 20) mit einem zweiten elektrischen Schalter gekoppelt ist, durch den bei Betätigung des Umschalters (10) der Istwertgeber für den Arbeitswiderstand der jeweils in Betrieb befindlichen Kraftheberanlage mit dem Regelgerät (35) verbindbar ist.

5. Ackerschlepper nach einem der vorhergehenden Ansprüche, dadurch gekennzeichnet, daß das Meßglied (40) für den Istwertgeber (41) des Zylinderdruckes an die vom Regelventil (6) ausgangsseitig über den Umschalter (10) mit dem jeweiligen Hubzylinder (10 bzw. 20) verbindbare Druckleitung (14) angeschlossen ist.

6. Ackerschlepper nach einem der vorhergehenden Ansprüche, dadurch gekennzeichnet, daß zur Verarbeitung der ermittelten Istwerte der Lage, des Arbeitswiderstandes bzw. des Zylinderdruckes ein elektrisches Regelgerät (35) mit einem elektrischen Systemschalter (38) zur Wahl der gewünschten Regelungsart des Arbeitsgeräts angeordnet ist und daß das Regelgerät (35) ebenfalls auf elektrischem Wege mit den elektromagnetischen Stellorganen (15, 16) des Regelventils (6) verbunden ist.

7. Ackerschlepper nach einem der vorhergehenden Ansprüche, dadurch gekennzeichnet, daß am Systemschalter (38) des Regelgeräts (35) auch eine Schaltstufe (47) für den Eingang externer Istwerte vorgesehen ist, die insbesondere von einem Istwertgeber an einem Arbeitsgerät ausgehen können.

## Claims

1. A tractor including a rear and a front implement-attaching device each of which is coupled to a hydraulic power lift (19, 20) for raising and lowering an implement, in which the rear power lift (19) is connected for the purpose of its actuation either: in dependence on measured or comparative data or a combination thereof ascertained from the respective implement's working resistance and its position and/or from the pressure prevailing in the lifting cylinder, or: at well, to regulating/control elements (4 and, respectively, 6, 35), and which the front power lift (20) is connected for the purpose of raising and lowering an implement at will to the controll element (4), characterized in that the front power lift is connectable to the elements (6, 35) to permit it to be also regulated by at least some of the regulating methods by which the rear power lift is arranged to be regulated, that the regulating elements (6, 35) and the control element (4) are common to both power lifts, and in that these elements are connectable by means of a change-over device (10) to the respective lifting cylinders of the two power lifts in such a way that one of the power lifts is controlledly actuated and the other one regulatedly or vice versa.

2. A tractor according to claim 1, in which the hydraulic system supplied by a hydraulic pump (1) includes the control element (4) which is a manually operable control valve serving to actuate the respective power lift at will, and also includes the regulating element (6) which is a regulating valve controlled by the regulator (35) arranged to process the ascertained data and which valve serves to automatically actuate the respective power lift, characterized in that the control valve (4) and the regulating valve (6) are connected to the respective lifting cylinders (19, 20) of the two power lifts through the change-over device (10) which is a multiway valve.

3. A tractor according to claim 1 or claim 2, in which the tractor is provided with electric sensors (31, 33) for ascertaining the actual data of the position of the respective implements, characterized in that the change-over device (10) for the lifting cylinders (19, 20) is connected to an electric switch (26) through which, upon actuation of the change-over device (10), the sensor (30 or 31) of the then operating lifting cylinder (19 or 20) is connectable to the regulator (35).

4. A tractor according to any of the claims 1 to 3, in which the tractor is provided with an electric sensor (45) for ascertaining the actual data of the working resistance, characterized in that the change-over device (10) for the lifting cylinders (19, 20) is connected to a further electric switch through which, upon actuation of the change-over device (10), the sensor for ascertaining the actual working resistance of the then operating power lift is connectable to the regulator (35).

5. A tractor according to any of the preceding claims, characterized in that the sensing member (40) of a sensor (41) for ascertaining the actual data of the pressure prevailing in the cylinders is connected to a pressure duct (14) extending from the outlet of the regulating valve (6) and connectable by the change-over device (10) to the respective cylinder (10, 20).

6. A tractor according to any of the preceding claims, characterized in that the regulator (35) for processing the actual data of the position, the working resistance or the pressure in the respective cylinder is provided with an electric selector switch (38) to permit selection of the regulating method desired for the implement, and in that the regulator (35) is also electrically connected to electromagnetic adjusting members (15, 16) of the regulating valve (6).

7. A tractor according to any of the preceding claims, characterized in that the selector switch (38) of the regulator (35) also includes a working point (47) for receiving actual data externally ascertained, particularly data originating from a sensor fitted to an implement.

## Revendications

1. Tracteur agricole avec, à l'arrière et du côté frontal, un dispositif de montage d'équipement et un vérin hydraulique (19, 20) couplé avec chacun de ces dispositifs, pour le levage et l'abaissement d'équipements de travail, le vérin arrière (19) étant relié à des éléments de commande et de réglage (4 ou bien 6, 35) pour son actionnement en fonction aussi bien de valeurs de mesure, de valeurs de comparaison, ou bien de valeurs mixtes, extraites de l'effort résistant et de la position d'un équipement de travail et/ou de le pression des vérins que d'un réglage arbitraire, tandis que le vérin côté frontal (20) est raccordé à un élément de commande (4) pour le soulèvement ou l'abaissement arbitraire d'un équipement de travail, tracteur caractérisé en ce que le vérin côté frontal est susceptible d'être relié pour son réglage à des éléments (6, 35) pour un mode de fonctionnement selon au moins une partie des types de réglage du vérin arrière, et que les deux vérins comportent des éléments de réglage communs (6, 35) et un élément de commande commun (4), auxquels les cylindres des deux vérins sont susceptibles d'être raccordés de façon que l'un fonctionne en étant susceptible d'être commandé, tandis que l'autre fonctionne en étant susceptible d'être réglé, ou inversement.

2. Tracteur abricole selon la revendication 1 dans lequel le système hydraulique alimenté par une pompe hydraulique (1) comporte une soupape de commande (4) réglable à la main pour l'actionnement arbitraire, ainsi qu'une soupape de réglage (6), influencée par un appareil de réglage (35) permettant de traiter les valeurs de mesure ainsi déterminées, pour le réglage automatique des installations de vérins, tracteur caractérisé en ce que la soupape de commande (4) et la soupape de réglage (6) sont en liaison avec les vérins (19, 20) des deux installations de vérins par l'intermédiaire d'un commutateur (10) revêtant le forme d'un distributeur.

3. Tracteur agricole selon les revendications 1 et 2 dans lequel il est prévu des capteurs électriques de valeurs de mesure (31, 33) pour la détermination des valeurs réelles de position, tracteur caractérisé en ce que le commutateur (10) pour les vérins (19, 20) est couplé avec un commutateur électrique (26) par l'intermédiaire duquel, lors de l'actionnement du commutateur (10), le capteur de valeur réelle de position (30 ou bien 31) du vérin se trouvant respectivement en service (19 ou bien 20) est susceptible d'être relié à l'appareil de réglage (35).

4. Tracteur agricole selon les revendications 1 à 3, dans lequel il est prévu des capteurs électriques de valeurs de mesure (45) pour la détermination des valeurs réelles de l'effort résistant de l'équipement de travail, tracteur caractérisé en ce que le commutateur (10) pour les vérins (19, 20) est couplé avec un second commutateur électrique par l'intermédiaire duquel, lors de l'actionnement du commutateur (10), le capteur de valeurs réelles pour l'effort résistant de l'installation de vérins se trouvant respectivement en service, est susceptible d'être relié à l'appreil de réglage (35).

5. Tracteur agricole selon une des précédentes revendications, caractérisé en ce que l'organe de mesure (40) pour le capteur de valeurs réelles (41) de la pression des vérins, est raccordé à la canalisation sous pression (14) sortant de la soupape de réglage (6) et susceptible d'être reliée, par l'intermédiaire du commutateur (10), avec le vérin considéré (19 ou 20).

6. Tracteur agricole selon une des précédentes revendications, caractérisé en ce que pour le traitement des valeurs réelles de position, d'efforts résistants, ou bien de pressions des vérins ainsi déterminées, il est prévu un appareil électrique de réglage (35) avec un commutateur électrique de système (38) pour la sélection du type de régulation souhaitée de l'équipement de travail, tandis que l'appareil de réglage (35) est également relié par des moyens électriques aux organes électro-magnétiques de réglage (15, 16) de la soupape de réglage (6).

7. Tracteur agricole selon une des précédentes revendications, caractérisé en ce qu'il est également prévu sur le commutateur de système (38) de l'appareil de réglage (35) un étage de commutation (47) pour l'entrée de valeurs réelles externes qui peuvent notamment provenir d'un détecteur de valeurs réelles sur un équipement de travail.

0 092 025